# EUROPEAN PATENT APPLICATION

(11) **EP 3 640 809 A1**
(43) Date of publication of application: **22.04.2020**
(21) Application number: 18817737.2
(22) Date of filing: 15.03.2018
(51) Int. Cl.: G06F 13/00, G06F 3/0484

(54) **SIGNAL PROCESSING APPARATUS**

(30) Priority: 12.06.2017 JP 2017114907
(71) Applicant: Audio-Technica Corporation, Machida-shi, Tokyo 194-8666 (JP)
(72) Inventor: SAKURAI Kazuyuki, Machida-shi Tokyo 194-8666 (JP); NAITO Hiroyuki, Machida-shi Tokyo 194-8666 (JP); OSHIMA Katsuyuki, Machida-shi Tokyo 194-8666 (JP)
(74) Representative: MacDougall, Alan John Shaw
(86) International application number: PCT/JP2018/010329
(87) International publication number: WO 2018/230061

(57) **Abstract**

An information processing apparatus and an information processing program can generate setting information to be set in devices even in an off-line state are provided.

An information processing apparatus 10 according to the present invention includes: a storage 11 that stores setting information for each of setting items relating to a device connected to a communication network N; a display part 12 that displays a setting screen to which the setting information is input on a display 20; and a controller 13 that stores the setting information input to the setting screen in the storage. The setting screen includes: a first setting screen to which the setting information for each of the setting items relating to a first device in an on-line state of being connected to the communication network N is input; and a second setting screen to which the setting information for each of the setting items relating to a second device in an off-line state of being not connected to the communication network N is input. The display part 12 simultaneously displays the first setting screen and the second setting screen on the display 20.

## Description

### TECHNICAL FIELD

The present invention relates to an information processing apparatus and an information processing program.

### BACKGROUND ART

Conference systems include, for example, a plurality of devices, such as mixers that execute combination, distribution, and balancing of sound signals from a plurality of microphones to output the sound signal. In such conference systems, setting information controlling operations of the devices is input (edited) in advance with a management terminal connected with each of the devices via a communication network and set (registered) in each of the devices.

For example, an application (web browser) that operates on the management terminal acquires setting files (web contents) stored inside the devices via the communication network, the setting files are rewritten in the management terminal, and the rewritten setting files are transmitted to the devices. As a result, setting information from the management terminal to the devices is set. Each of the devices stores the setting file received from the management terminal inside the device, and hereinafter operates with reference to the stored setting file.

Setting of such setting information is executed in an on-line state in which each of the devices is connected in a communicable manner with the management terminal via the communication network. Therefore, the setting is not executed in an off-line state in which each of the devices is not connected in a communicable manner with the management terminal via the communication network.

A technique for generating temporary setting information when a device that is a target for setting is in an off-line state has been proposed (for example, see Japanese Unexamined Patent Application Publication No. 2005-44111).

### SUMMARY OF INVENTION

### TECHNICAL PROBLEM

However, in the invention disclosed in Japanese Unexamined Patent Application Publication No. 2005-44111, the temporary setting information generated for the device in the off-line state is replaced by formal setting information when the device becomes an on-line state. Specifically, in the invention, the temporary setting information generated for the device in the off-line state is not set in the device. In other words, the invention generates no setting information to be set in the device, when the device is in the off-line state.

An object of the present invention is to solve the problem described above and to provide an information processing apparatus and an information processing program that can generate setting information to be set in devices even in an off-line state.

### SOLUTION TO PROBLEM

The signal processing device according to the present invention includes: a storage that stores setting information for each of one or more setting items relating to a device connected to a communication network; a display part that displays a setting screen to which the setting information is input on a display; and a controller that stores the setting information input to the setting screen in the storage. The setting screen includes: a first setting screen to which the setting information for each of the setting items relating to a first device in an on-line state of being connected to the communication network is input; and a second setting screen to which the setting information for each of the setting items relating to a second device in an off-line state of being not connected to the communication network is input. The display part simultaneously displays the first setting screen and the second setting screen on the display.

### ADVANTAGEOUS EFFECTS OF INVENTION

According to the present invention, an information processing apparatus and an information processing program that can generate setting information to be set in a device even in the off-line state can be provided.

### BRIEF DESCRIPTION OF DRAWINGS

FIG. 1 is a network connection diagram illustrating an embodiment of the information processing apparatus according to the present invention.
FIG. 2 is a functional block diagram illustrating the embodiment of the information processing apparatus of FIG. 1.
FIG. 3 is a schematic diagram of an initial screen of a setting screen displayed by the information processing apparatus of FIG. 1.
FIG. 4 is a flowchart illustrating information processing executed by the information processing apparatus of FIG. 1.
FIG. 5 is a schematic diagram of another setting screen displayed by the information processing apparatus of FIG. 1.
FIG. 6 is a schematic diagram of still another setting screen displayed by the information processing apparatus of FIG. 1.
FIG. 7 is a schematic diagram of still another setting screen displayed by the information processing apparatus of FIG. 1.
FIG. 8 is a schematic diagram of setting information stored in a storage included in the information processing apparatus of FIG. 1.
FIG. 9 is a schematic diagram of still another setting screen displayed by the information processing apparatus of FIG. 1.
FIG. 10 is a schematic diagram of still another setting screen displayed by the information processing apparatus of FIG. 1.
FIG. 11 is a schematic diagram of still another setting screen displayed by the information processing apparatus of FIG. 1.
FIG. 12 is a schematic diagram of another setting information stored in the storage included in the information processing apparatus of FIG. 1.
FIG. 13 is a schematic diagram of still another setting screen displayed by the information processing apparatus of FIG. 1.
FIG. 14 is a schematic diagram of still another setting screen displayed by the information processing apparatus of FIG. 1.
FIG. 15 is a schematic diagram of still another setting information stored in the storage included in the information processing apparatus of FIG. 1.
FIG. 16 is another network connection diagram illustrating the embodiment of the information processing apparatus of FIG. 1.
FIG. 17 is a flowchart illustrating information processing executed by the information processing apparatus of FIG. 16.
FIG. 18 is a schematic diagram of a setting screen displayed by the information processing apparatus of FIG. 16.
FIG. 19 is a schematic diagram of another setting screen displayed by the information processing apparatus of FIG. 16.
FIG. 20 is a schematic diagram of still another setting screen displayed by the information processing apparatus of FIG. 16.
FIG. 21 is a schematic diagram of still another setting screen displayed by the information processing apparatus of FIG. 16.
FIG. 22 is a schematic diagram of setting information stored in a storage included in the information processing apparatus of FIG. 16.

### DESCRIPTION OF EMBODIMENTS

Embodiments of an information processing apparatus (hereinafter referred to as "present apparatus ") and an information processing program (hereinafter referred to as "present program") according to the present invention will now be described with reference to the attached drawings.

### Network Connection of Present Apparatus (1)

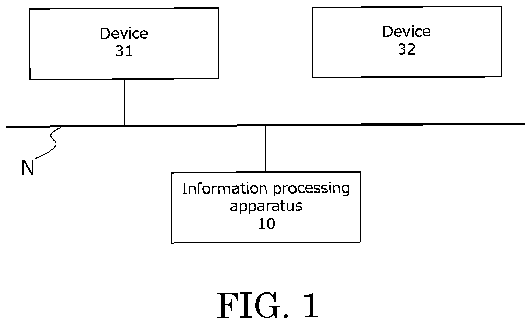

FIG. 1 is a network connection diagram illustrating an embodiment of the present apparatus.

The present apparatus 10 (information processing apparatus 10) is connected with devices via a communication network N. The present apparatus 10 is an information processing apparatus that registers, in the devices, device setting information (SINFO) input by a user of the present apparatus 10 to the present apparatus 10. The present apparatus 10 is, for example, a personal computer or a tablet terminal. The user inputs device setting information to a setting screen displayed by the present apparatus 10. The present apparatus 10 transmits (registers) the device setting information input to the setting screen to the devices via the communication network N.

The communication network N is, for example, a local area network (LAN) or the Internet.

The devices are devices that operate based on the setting information received from the present apparatus 10 via the communication network N. The devices are, for example, sound signal processing devices, such as mixers, executing combination, distribution, and balancing of a plurality of sound signals.

The devices include a device 31 and a device 32. The device 31 is a device (on-line device) in an on-line state of being connected to the communication network N. The device 32 is a device (off-line device) in an off-line state of being not connected to the communication network N. Specifically, FIG. 1 illustrates that the present apparatus 10 is connected with the device 31 via the communication network N ("connection" includes a state in which the present apparatus 10 communicable with the device 31. The same is applicable hereinafter). Further, FIG. 1 illustrates that the present apparatus 10 is not connected with the device 32 via the communication network N. FIG. 1 illustrates that the device 32 is in an off-line state of not being connected to the communication network N. However, as described below, the device 32 is connectable with the communication network N ("connection" includes the state in which the present apparatus 10 communicable with the device 32. The same is applicable hereinafter). Specifically, the device 31 and the device 32 are devices connectable with the present apparatus 10 via the communication network N.

It should be noted that the devices may include a plurality of on-line devices and a plurality of off-line devices. Specifically, the present apparatus may be connected with one or more on-line devices and one or more off-line devices via the communication network.

### Configuration of Present Apparatus

The configuration of the present apparatus 10 will now be described.

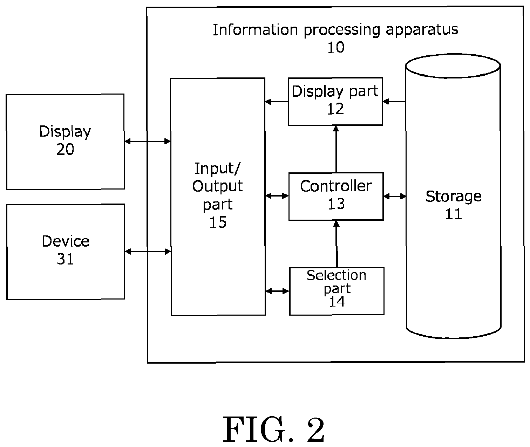

FIG. 2 is a functional block diagram of the present apparatus 10.

The present apparatus 10 includes a storage 11, a display part 12, a controller 13, a selection part 14, and an input/output part 15. The present apparatus 10 is connected with a display 20 and the device 31 via the input/output part 15.

The storage 11 stores therein setting information for each of setting items relating to the devices, and information and/or computer programs required for the present apparatus 10 to execute the below-mentioned information processing. The storage 11 is, for example, a semiconductor memory, such as a random access memory (RAM) and a flash memory, and a removable medium, such as a hard disk, a magnetic disk, a magneto-optical disk, an optical disk, a universal serial bus (USB) memory, and a memory card.

The setting information includes a first setting item and a second setting item. The first setting item is a setting item that can be set only when the device is in an on-line state. The second setting item is a setting item that can be set both when the device is in the on-line state and when the device is in the off-line state.

The display part 12 displays a setting screen to which the setting information is input on the below-mentioned display 20. The setting screen includes a first setting screen and a second setting screen. The display part 12 executes display of only the first setting screen, display of only the second setting screen, and simultaneous display of the first setting screen and the second setting screen. The first setting screen and the second setting screen will be described later.

The controller 13 stores the setting information input to the first setting screen in the storage 11, and stores the setting information input to the second setting screen in the storage 11. Specifically, the controller 13 stores the setting information input to the setting screen in the storage 11. The controller 13 also transmits the setting information input to the first setting screen to the on-line device.

The selection part 14 specifies a button selected by the user by operating an input device (not illustrated) of the present apparatus 10, out of a plurality of buttons on the screen displayed on the display 20. The input device of the present apparatus 10 is, for example, a mouse and a keyboard. The screen displayed on the display 20 and the buttons on the screen will be described later.

The input/output part 15 outputs the information processed by the display part 12, the controller 13, and the selection part 14 to the display 20 and the device 31. Specifically, the input/output part 15 provides functions of a communication interface. In other words, the input/output part 15 provides data exchange (communication) between the present apparatus 10 and the display 20 and/or the device 31. The input/output part 15 causes the present apparatus 10 to communicate with the on-line device connected to the communication network N. Specifically, the display part 12, the controller 13, and the selection part 14 of the present apparatus 10 communicate with the on-line device connected to the communication network N via the input/output part 15.

The display 20 displays the setting screen to which the setting information for each of the setting items relating to the devices 31 and 32 is input.

### Present Program

The present apparatus 10 is, for example, a personal computer. In the present apparatus 10, the present program operates, and the present program provides the below-mentioned information processing of the present apparatus 10 in cooperation with the hardware resources of the present apparatus 10.

Specifically, the present program causes the personal computer to function as the present apparatus 10, and causes the personal computer to execute the below-mentioned information processing.

### Setting Screen of Present Apparatus

### Initial Screen

The setting screen displayed on the display 20 by the present apparatus 10 will now be described.

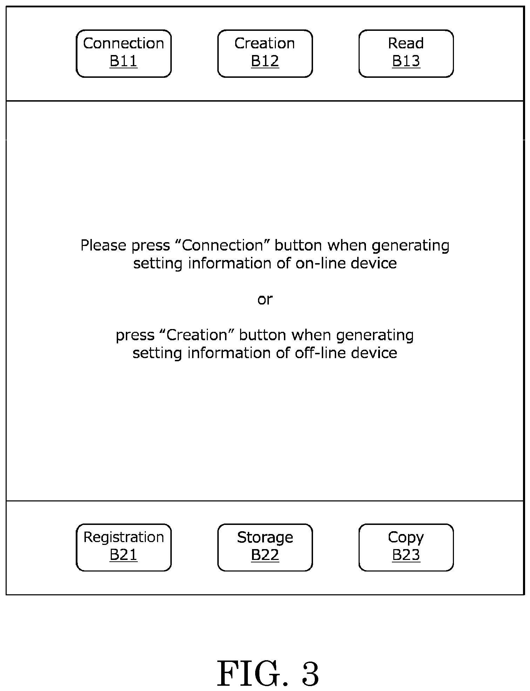

FIG. 3 is a schematic diagram of an initial screen of the setting screen displayed on the display 20 by the present apparatus 10.

FIG. 3 illustrates that a connection button B11, a creation button B12, a read button B13, a registration button B21, a storage button B22, and a copy button B23 are displayed on the initial screen of the setting screen. The buttons B11 to B23 are images being displayed on the screen. Each of the buttons B11 to B23 can be selected (designated) by the user by operating the input device of the present apparatus 10. When one of the buttons is selected by the user by using the input device of the present apparatus 10, the present apparatus 10 specifies the selected button using the selection part 14, and notifies the controller 13 of the specified button. The present apparatus 10 executes specific information processing (such as execution of a command) using the controller 13. Such operations of the selection part 14 and/or the controller 13 also apply to operations on buttons in the below-mentioned setting screen.

FIG. 3 also illustrates that a message for the user is displayed on the initial screen. The message displayed on the initial screen indicates that the connection button B11 is to be selected for generation of the setting information of the on-line device, and that the creation button B12 is to be selected for generation of the setting information of the off-line device.

When the connection button B11 is selected, the present apparatus 10 is connected with the device 31 connected to the communication network N, using the input/output part 15. When the present apparatus 10 is connected with the device 31, the present apparatus 10 receives the device name stored inside the device 31 from the device 31 using the controller 13. When the present apparatus 10 receives the device name from the device 31, the present apparatus 10 displays a message as to whether to generate the first setting screen on the display 20, using the display part 12. The message as to whether to generate the first setting screen is selectably displayed on the display 20.

The first setting screen is a screen to which setting information for each of the setting items relating to the on-line device that is the first device is input. The first device is a device in an on-line state of being connected to the communication network N. The user inputs the setting information for each of the setting items displayed on the first setting screen to the first setting screen using the input device of the present apparatus 10.

When the creation button B12 is selected, the present apparatus 10 displays the second setting screen on the display 20 using the display part 12. The user inputs setting information for each of the setting items displayed on the second setting screen to the second setting screen, using the input device of the present apparatus 10.

The second setting screen is a screen to which setting information for each of the setting items relating to the off-line device that is the second device is input. The second device is a device in an off-line state of being not connected to the communication network N. The user inputs setting information for each of the setting items relating to the device 32, which is a device in the off-line state, to the second setting screen, using the input device of the present apparatus 10.

When the read button B13 is selected, the present apparatus 10 reads, using the controller 13 and the selection part 14, setting information for each of the setting items relating to the device 31, which have been copied and stored in advance in the storage 11. The present apparatus 10 also displays, using the display part 12, the setting information as a candidate for the setting information of the device 32 in the second setting screen. The copying will be described later.

When the registration button B21 is selected, the present apparatus 10 transmits, using the controller 13 and the selection part 14, the setting information input to the first setting screen to the device 31, and stores the setting information in the storage 11 as setting information for each of the setting items relating to the device 31. The device 31 stores the setting information received from the present apparatus 10 in a storage included in the device 31. After storing the setting information received from the present apparatus 10 in the storage, the device 31 operates with reference to the stored setting information.

When the storage button B22 is selected, the present apparatus 10 stores, using the controller 13 and the selection part 14, the setting information input to the second setting screen in the storage 11, as setting information for each of the setting items relating to the device 32.

When the copy button B23 is selected, the present apparatus 10 temporarily stores the second setting item in the storage 11 as setting information relating to the off-line device, using the controller 13 and the selection part 14.

### Information Processing of Present Apparatus

Information processing executed by the present apparatus 10 will now be described. Hereinafter, an explanation will be made with a case where the user inputs the setting information of the device 32 in the off-line state to the present apparatus 10 connected with the device 31 in the on-line state, with reference to the setting information for each of the setting items relating to the device 31, after the user inputs the setting information for each of the setting items relating to the device 31, as an example.

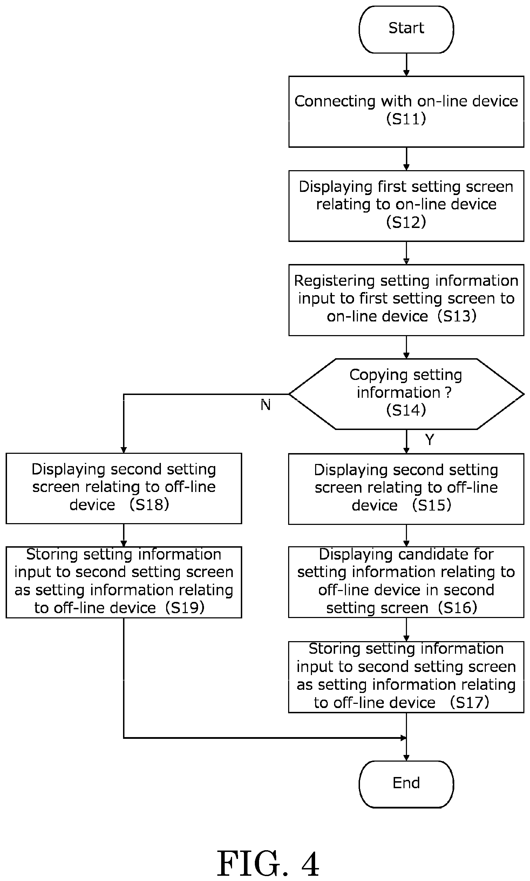

FIG. 4 is a flowchart illustrating information processing executed by the present apparatus 10.

First, the present apparatus 10 is connected with the on-line device (S11).

### First Setting Screen

Then, the present apparatus 10 displays the on-line device communicable with the present apparatus 10 via the communication network N on the display 20, using the display part 12.

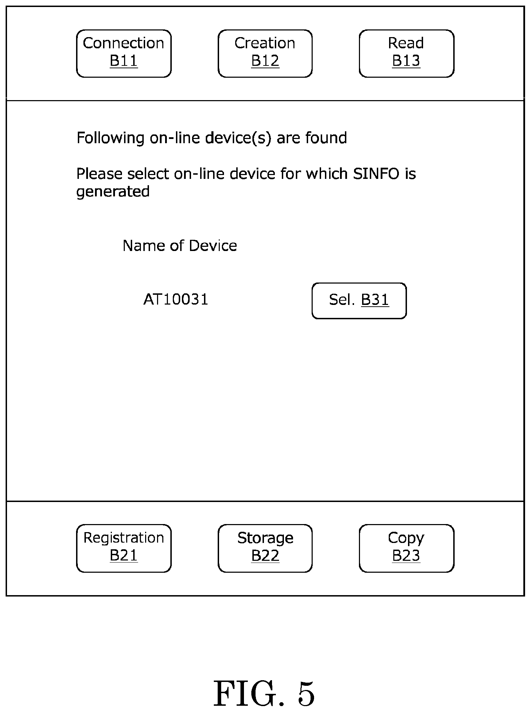

FIG. 5 is a schematic diagram of a setting screen of the present apparatus 10.

FIG. 5 illustrates that a list of the on-line devices and a selection button B31 are displayed. The selection button B31 is a button for the user to select the on-line device that is the target for generation of setting information. Specifically, FIG. 5 illustrates that the device (device 31) having the device name "AT10031" is connected with the present apparatus 10 via the communication network N and the selection button B31 is displayed. The selection button B31 is a button for selection of the device 31.

FIG. 5 also illustrates that a message for the user is displayed on the screen. The message displayed on the screen indicates that one or more on-line devices have been found, and that selection of an on-line device for which setting information is generated from the on-line devices is required.

Hereinafter, an explanation will be made on the supposition that the user has selected the selection button B31 to generate setting information of the device 31.

Referring back to FIG. 4, the present apparatus 10 then displays the first setting screen relating to the selected device 31 on the display 20, using the display part 12 (S12).

The first setting screen in the present invention is displayed on the display 20 by, for example, acquiring web content stored inside the device 31 with the web browser function of the computer program operating on the present apparatus 10 when the selection button B31 is selected. The file form of the web content is, for example, JavaScript (registered trademark) Object Notation (JSON), Extensible Markup Language (XML), Domain-Specific Language (DSL), or Hyper Text Markup Language (HTML).

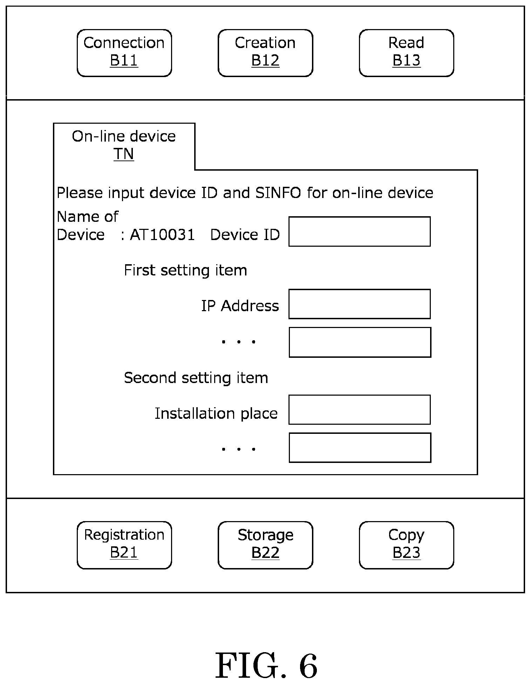

FIG. 6 is a schematic diagram of the first setting screen displayed on the display 20.

FIG. 6 illustrates that the first setting screen relating to the device 31 is displayed in a tab form on the display 20. The tab will be described later.

The first setting screen displays the device name "AT10031" selected at the setting screen illustrated in FIG. 5. The first setting screen also displays input fields for a device ID and setting information for the first setting item and the second setting item. Specifically, the setting information that can be input to the first setting screen includes "first setting item" and "second setting item".

FIG. 6 also illustrates that the first setting item, such as the IP address of the device 31, is included, and the second setting item, such as the installation place of the device 31, is included.

In addition, FIG. 6 illustrates that a message for the user is displayed on the first setting screen. The message displayed on the first setting screen indicates that input of the device ID and the setting information of the on-line device is required. The device ID is unique data identifying the device.

The user then inputs the device ID and the setting information to the first setting screen using the input device of the present apparatus 10.

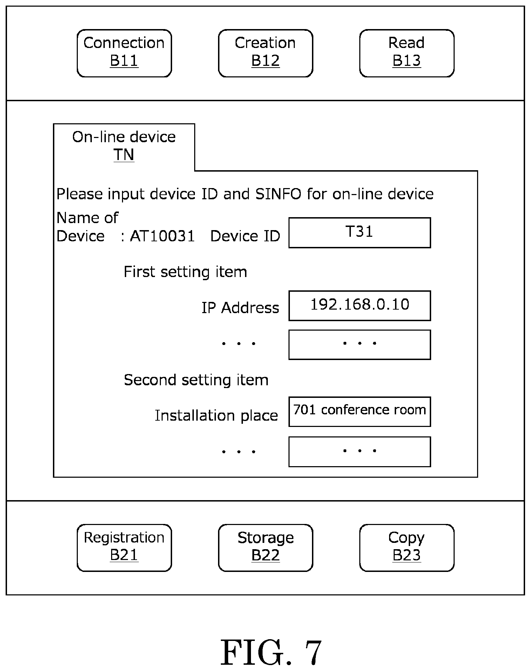

FIG. 7 is a schematic diagram of the first setting screen to which the device ID and the setting information have been input.

FIG. 7 illustrates that the device ID "T31", the first setting item, such as the IP address "192.168.0.10", and the second setting item, such as the installation place "No. 701 conference room" have been input to the first setting screen by the user. The device ID "T31" is information determined as desired by the user, as information identifying the device 31.

Referring back to FIG. 4, the present apparatus 10 then transmits the setting information input to the first setting screen to the device 31 using the controller 13, and registers the setting information therein (S13). The present apparatus 10 also stores the setting information input to the first setting screen in the storage 11 using the controller 13. When the device 31 receives the setting information from the controller 13 of the present apparatus 10, the device 31 stores the received setting information in the storage member of the device 31.

Registration of the setting information in the device 31 is executed by the user by selecting the registration button B21 using the input device of the present apparatus 10.

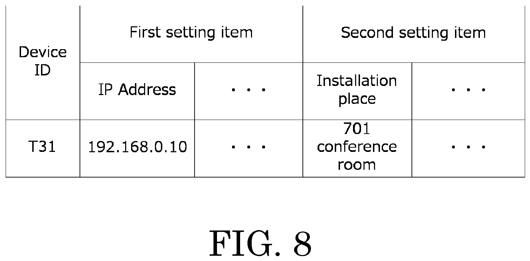

FIG. 8 is a schematic diagram of the setting information stored in the storage 11.

When the registration button B21 is selected by the user, the present apparatus 10 transmits the setting information input to the first setting screen to the device 31 using the controller 13 and the selection part 14, and stores the setting information in the storage 11 as the setting information for each of the setting items relating to the device 31 using the controller 13 and the selection part 14.

FIG. 8 illustrates that the device ID and the setting information input to the first setting screen are stored in association with each other in the storage 11. Specifically, for example, the present apparatus 10 can read, using the controller 13, part of or the whole setting information stored in association with the device ID in the storage 11, by referring to the storage 11 utilizing the device ID.

At this stage, for example, the present apparatus 10 stores, using the controller 13, the setting information input to the second setting item out of the setting information included in the first setting screen in the storage 11 as specific setting information. Specifically, the controller 13 stores the second setting item in the storage 11 as the specific setting information, out of the setting information included in the first setting screen, the first setting item, such as the IP address "192.168.0.10", and the second setting item, such as the installation place "No. 701 conference room". The specific setting information is setting information for the second setting item included in the second setting screen, and determined as desired by the user.

Referring back to FIG. 4, the present apparatus 10 then selects whether to copy the setting information (S14) using the storage 11, the controller 13, and the selection part 14,. Copying of the setting information is executed by the user by selecting the copy button B23 using the input device of the present apparatus 10. When copying of the setting information is executed, the present apparatus 10 temporarily stores, in the storage 11 using the storage 11 and the controller 13, setting information for the second setting item that can be set even in the off-line state, out of the setting information for each of the setting items relating to the device 31 input to the first setting screen, as a candidate for setting information for each of the setting items relating to the off-line device. Specifically, the setting information temporarily stored in the storage 11 is specific setting information.

When copying of the setting information is selected ("Y" at S14), the user selects the copy button B23 using the input device of the present apparatus 10. By contrast, when copying of the setting information is not selected ("N" at S14), the user does not select the copy button B23.

### Second Setting Screen

When copying of the setting information is selected ("Y" at S14), the present apparatus 10 displays the second setting screen relating to the off-line device on the display 20 using the display part 12 and the selection part 14 (S15). Display of the second setting screen is executed by the user by selecting the creation button B12 using the input device of the present apparatus 10.

The second setting screen in the present invention is displayed on the display 20 by, for example, acquiring the web content stored in the storage 11 with the web browser function of the computer program operating on the present apparatus 10, when the creation button B12 is selected. The file form of the web content is, for example, JSON, XML, DSL, or HTML.

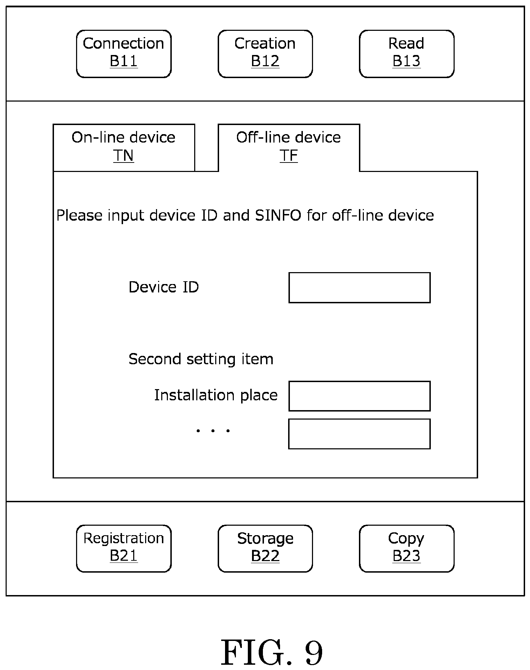

FIG. 9 is a schematic diagram of the second setting screen displayed on the display 20.

FIG. 9 illustrates that input fields for the device ID and the setting information for the second setting item are displayed. The setting information that can be input to the second setting screen is only "second setting item" that can be set in the off-line state, out of the first setting item and the second setting item.

FIG. 9 also illustrates that a message for the user is displayed on the second setting screen. The message displayed on the second setting screen indicates that input of the device ID and the setting information of the off-line device is required.

In addition, FIG. 9 illustrates that the first setting screen relating to the device 31 and the second setting screen relating to the off-line device are displayed in the tab form on the display 20. Specifically, when the input device of the present apparatus 10 is operated by the user to select the tab TN is selected, the first setting screen is displayed on the display 20. When the tab TF is selected, the second setting screen is displayed on the display 20. Specifically, FIG. 9 illustrates that the present apparatus 10 selectively and simultaneously displays the first setting screen relating to the device 31 that is the on-line device and the second setting screen relating to the off-line device in the tab form on the display 20 using the display part 12.

As described above, the present apparatus 10 simultaneously displays the web content that is the first setting screen and stored inside the device 31, and the web content that is the second setting screen and stored in the storage 11, in the tab form on the display 20 using the web browser function. A plurality of the setting screens displayed in the tab form on the display 20 are switched by the user by selecting the tab using the input device of the present apparatus 10, and displayed on the display 20.

Referring back to FIG. 4, the present apparatus 10 then displays the candidate for the setting information for each of the setting items relating to the off-line device in the second setting screen using the display part 12 (S16). The display of the candidate for the setting information for each of the setting items relating to the off-line device is executed by the user by selecting the read button B13 using the input device of the present apparatus 10. When the read button B13 is selected, the present apparatus 10 reads the second setting item temporarily stored in the storage 11 using the controller 13 and the selection part 14. The present apparatus 10 also displays the read second setting item in the second setting screen, as the candidate for the setting information for each of the setting items relating to the off-line device, using the display part 12. At this stage, the second setting item displayed on the second setting screen is setting information for each of the setting items relating to the device 31 and temporarily stored in the storage 11 at the previous copying processing (S14). The second setting item displayed on the second setting screen is specific setting information.

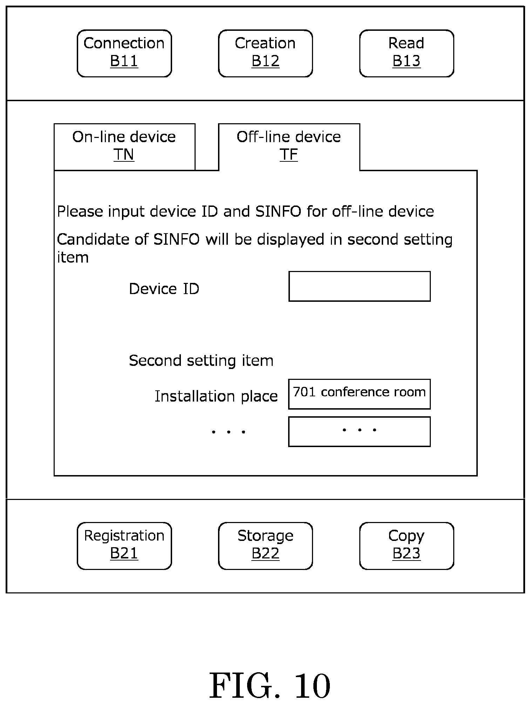

FIG. 10 is a schematic diagram of the second setting screen. In the second setting screen, setting information for each of the setting items relating to the device 31 and stored in the storage 11 is displayed as the candidate for the setting information for each of the setting items relating to the off-line device that is a new target for generation of setting information.

FIG. 10 illustrates that the second setting item, such as the installation place "No. 701 conference room", is displayed on the second setting screen. Specifically, FIG. 10 illustrates that the present apparatus 10 displays the specific setting information on the display 20 using the display part 12, as the candidate for the setting information for the second setting item included in the second setting screen.

FIG. 10 also illustrates that a message for the user is displayed on the second setting screen. The message displayed on the second setting screen indicates that input of the device ID and the setting information of the off-line device is required and that the candidate for the setting information is displayed for the second setting item.

The user then inputs the device ID to the second setting screen using the input device of the present apparatus 10. In addition, when the user judges that change of the candidate for the second setting item read into and being displayed on the second setting screen is required, the user rewrites the candidate for the second setting item by inputting setting information for the second setting item using the input device of the present apparatus 10.

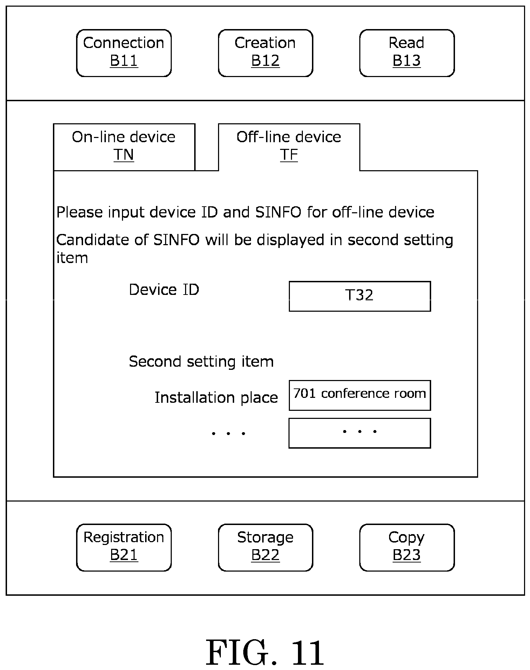

FIG. 11 is a schematic diagram of the second setting screen to which the device ID and setting information for the second setting item have been input.

FIG. 11 illustrates that the device ID "T32" has been input to the second setting screen by the user. The device ID "T32" is information determined as desired by the user as information identifying the device 32.

Hereinafter, an explanation will be made with the case where the user adopts the candidate for the setting information for the second setting item without any processing, as an example. Specifically, the user does not change the displayed candidate for the setting information.

Referring back to FIG. 4, the present apparatus 10 then stores, using the controller 13 and the selection part 14, the setting information input to the second setting screen, as the setting information for each of the setting items relating to the device 32 that is the off-line device (S17).

Storage of the setting information for each of the setting items relating to the device 32 is executed by the user by selecting the storage button B22 using the input device of the present apparatus 10. When the storage button B22 is selected, the present apparatus 10 stores, using the controller 13 and the selection part 14, the setting information input to the second setting screen in the storage 11, as the setting information for each of the setting items relating to the device 32 that is the off-line device. Specifically, whether the candidate for the setting information for the second setting item is stored in the storage 11 as the setting information for the second setting item included in the second setting screen is determined based on whether the storage button B22 has been selected. Specifically, the selection part 14 selects whether to store the candidate for the setting information for the second setting item in the storage 11 as the setting information for the second setting item included in the second setting screen, based on whether the storage button B22 has been selected. In addition, the controller 13 stores the candidate for the setting information for the second setting item in the storage 11 as the setting information for the second setting item included in the second setting screen, based on a result of selection with the selection part 14, that is, based on specification of selection of the storage button B22 with the selection part 14.

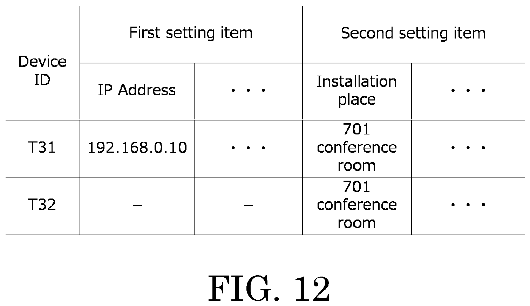

FIG. 12 is a schematic diagram of the setting information stored in the storage 11.

When the user selects the storage button B22 using the input device of the present apparatus 10, the present apparatus 10 stores, using the controller 13 and the selection part 14, the setting information input to the second setting screen in the storage 11, as the setting information for each of the setting items relating to the device 32.

FIG. 12 illustrates that the device ID and the setting information for the second setting item input to the second setting screen are stored in association with each other in the storage 11. Specifically, for example, the present apparatus 10 can read, using the controller 13, part of or the whole setting information stored in association with the device ID in the storage 11, by referring to the storage 11 utilizing the device ID.

At this stage, for example, the present apparatus 10 stores, using the controller 13, the setting information input to the second setting item included in the second setting screen in the storage 11 as specific setting information. Specifically, the controller 13 stores the second setting item included in the second setting screen, such as the installation place "No. 701 conference room", in the storage 11 as the specific setting information.

Referring back to FIG. 4, when copying of the setting information is not selected ("N" at S14), the present apparatus 10 displays the second setting screen relating to the off-line device on the display 20 using the display part 12 (S18). Display of the second setting screen is executed by the user by selecting the creation button B12 using the input device of the present apparatus 10.

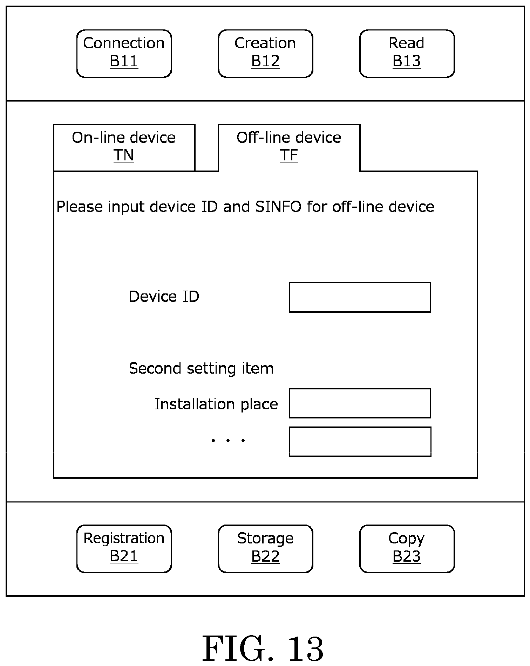

FIG. 13 is a schematic diagram of the second setting screen displayed on the display 20.

FIG. 13 illustrates that input fields for the device ID and the setting information for the second setting item are displayed. The setting information that can be input to the second setting screen is only the "second setting item" that can be set in the off-line state, out of the first setting item and the second setting item.

FIG. 13 also illustrates that a message for the user is displayed on the second setting screen. The message displayed on the second setting screen indicates that input of the device ID and the setting information of the off-line device is required.

FIG. 13 also illustrates that the first setting screen relating to the device 31 and the second setting screen relating to the off-line device are displayed in the tab form on the display 20. Specifically, when the input device of the present apparatus 10 is operated by the user to select the tab TN, the first setting screen is displayed on the display 20. When the tab TF is selected, the second setting screen is displayed on the display 20. Specifically, FIG. 13 illustrates that the present apparatus 10 selectively and simultaneously displays the first setting screen relating to the device 31 that is the on-line device and the second setting screen relating to the off-line device in the tab form on the display 20 using the display part 12.

The user then inputs the device ID and the second setting item to the second setting screen using the input device of the present apparatus 10. The user also inputs setting information for the second setting item, because the copy button B23 of the setting information has not been selected.

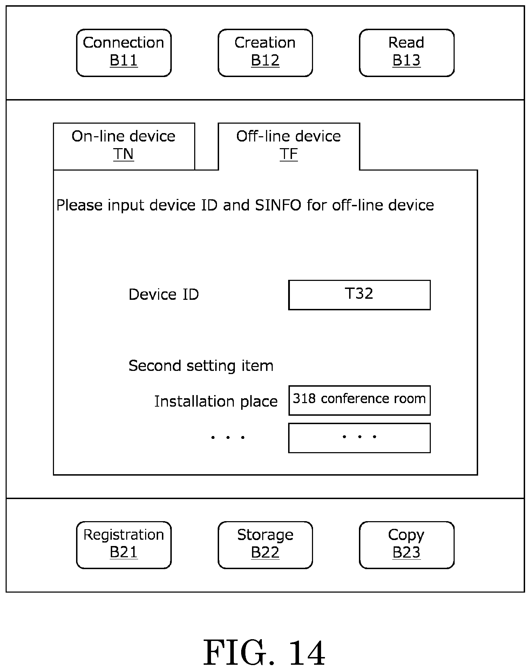

FIG. 14 is a schematic diagram of the second setting screen to which the device ID and setting information for the second setting item have been input.

FIG. 14 illustrates that the device ID "T32" and the second setting item, such as the installation place "No. 318 conference room", are input to the second setting screen by the user. The device ID "T32" is information determined as desired by the user, as information identifying the device 32.

Referring back to FIG. 4, the present apparatus 10 then stores, using the controller 13 and the selection part 14, the setting information input to the second setting screen, as the setting information for each of the setting items relating to the device 32 that is the off-line device (S19).

Storage of the setting information for each of the setting items relating to the device 32 is executed by the user by selecting the storage button B22 using the input device of the present apparatus 10. When the storage button B22 is selected, the present apparatus 10 stores, using the controller 13 and the selection part 14, the setting information input to the second setting screen in the storage 11, as the setting information for each of the setting items relating to the device 32 that is the off-line device.

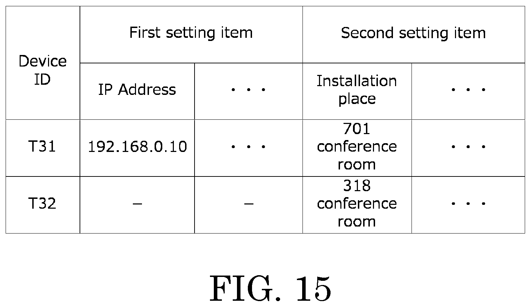

FIG. 15 is a schematic diagram of the setting information stored in the storage 11.

When the user selects the storage button B22 using the input device of the present apparatus 10, the present apparatus 10 stores, using the controller 13 and the selection part 14, the setting information input to the second setting screen in the storage 11, as the setting information for each of the setting items relating to the device 32.

FIG. 15 illustrates that the device ID and the setting information for the second setting item input to the second setting screen are stored in association with each other in the storage 11. Specifically, for example, the present apparatus 10 can read, using the controller 13, part of or the whole setting information stored in association with the device ID in the storage 11, by referring to the storage 11 utilizing the device ID.

At this stage, for example, the present apparatus 10 stores, using the controller 13, the setting information input to the second setting item included in the second setting screen in the storage 11 as the specific setting information. Specifically, the controller 13 stores the second setting item included in the second setting screen, such as the installation place "No. 318 conference room", in the storage 11 as the specific setting information.

### Network Connection of Present Apparatus (2)

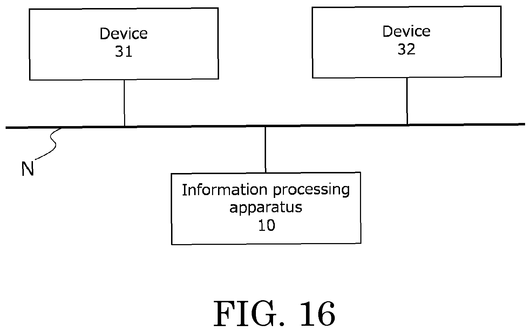

FIG. 16 is a network connection diagram illustrating the embodiment of the present apparatus .

FIG. 16 illustrates that the device 32 that was in the off-line state of not being connected to the communication network N in the previous information processing of the present apparatus 10 is in the on-line state. Specifically, FIG. 16 illustrates that the present apparatus 10 is connected with the device 31 and the device 32 via the communication network N.

### Information Processing of Present Apparatus

The following is an explanation of information processing executed by the present apparatus 10. Hereinafter, an explanation will be made with the case where, in the previous processing (S17, S19), the user stores the setting information for each of the setting items relating to the device 32 that was in the off-line state, and then inputs the setting information of the device 32 that has become the on-line state to the present apparatus 10 with reference to the stored setting information for each of the setting items relating to the device 32, as an example.

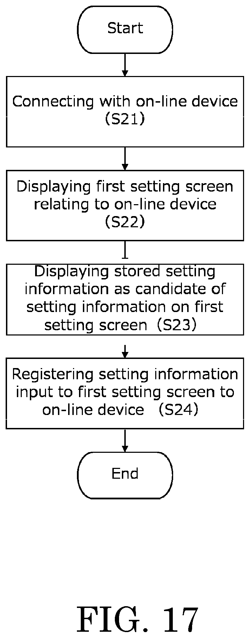

FIG. 17 is a flowchart illustrating information processing executed by the present apparatus 10.

First, the present apparatus 10 is connected with the on-line devices (S21).

### First Setting Screen

Then, the present apparatus 10 displays the on-line devices communicable with the present apparatus 10 via the communication network N on the display 20 using the display part 12.

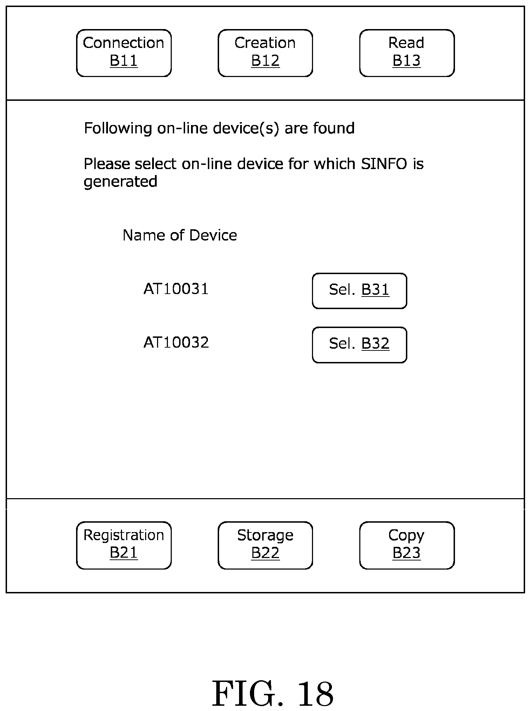

FIG. 18 is a schematic diagram of the setting screen of the present apparatus 10.

FIG. 18 illustrates that a list of the on-line devices and selection buttons B31 and B32 are displayed. The selection buttons B31 and B32 are buttons for the user to select the on-line device that is the target for generation of setting information. Specifically, FIG. 18 illustrates that the device (device 31) with the device name "AT 10031" and the device (device 32) with the device name "AT10032" are connected with the present apparatus 10 via the communication network N, and that the selection button B31 and the selection button B32 are displayed. The selection button B31 is a button for selection of the device 31, and the selection button B32 is a button for selection of the device 32.

FIG. 18 also illustrates that a message for the user is displayed on the setting screen. The message displayed on the setting screen indicates that one or more on-line devices have been found, and that selection of the on-line device for which setting information is generated is required.

Hereinafter, an explanation will be made on the supposition that the user has selected the selection button B32 to generate setting information of the device 32.

Referring back to FIG. 17, the present apparatus 10 then displays the first setting screen relating to the selected device 32 on the display 20, using the display part 12 (S22).

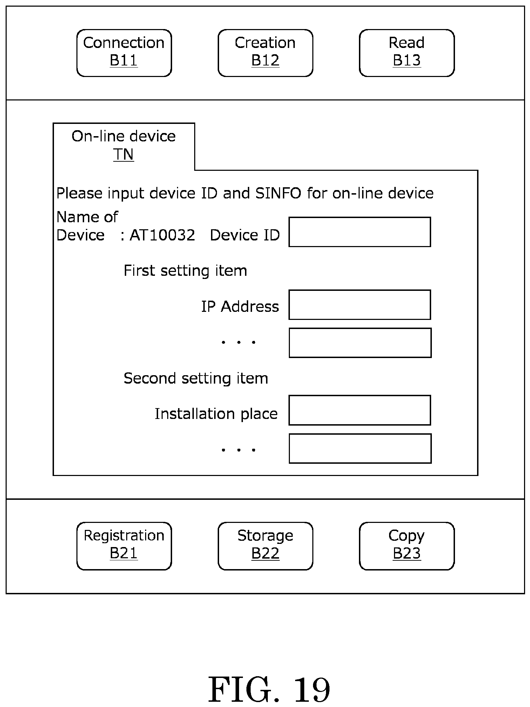

FIG. 19 is a schematic diagram of the first setting screen displayed on the display 20.

FIG. 19 illustrates that the first setting screen relating to the device 32 is displayed in the tab form on the display 20.

The first setting screen displays the device name "AT10032" selected in the setting screen illustrated in FIG. 18. The first setting screen also displays input fields for the device ID and the setting information for the first setting item and the second setting item.

FIG. 19 also illustrates that a message for the user is displayed on the first setting screen. The message displayed on the first setting screen indicates that input of the device ID and the setting information of the on-line device is required.

Referring back to FIG. 17, the present apparatus 10 then displays the candidate for the setting information for each of the setting items relating to the device 32 in the first setting screen using the display part 12 (S23). The candidate for the setting information for each of the setting items relating to the device 32 is executed by the user by selecting the read button B13 using the input device of the present apparatus 10. When the read button B13 is selected, the present apparatus 10 reads the second setting item temporarily stored in the storage 11 using the controller 13 and the selection part 14. The present apparatus 10 also displays the read second setting item in the first setting screen, as the candidate for the setting information for each of the setting items relating to the device 32, using the display part 12. At this stage, the second setting item displayed on the first setting screen is setting information for each of the setting items relating to the device 32 and stored in the storage 11 at the previous storage processing (S17, S19). The second setting item displayed on the first setting screen is specific setting information.

Hereinafter, an explanation will be made with the case where the present apparatus 10 reads the setting information stored in the storage processing (S17) in the storage processing (S17, S19), and generates setting information relating to the device 32, as an example.

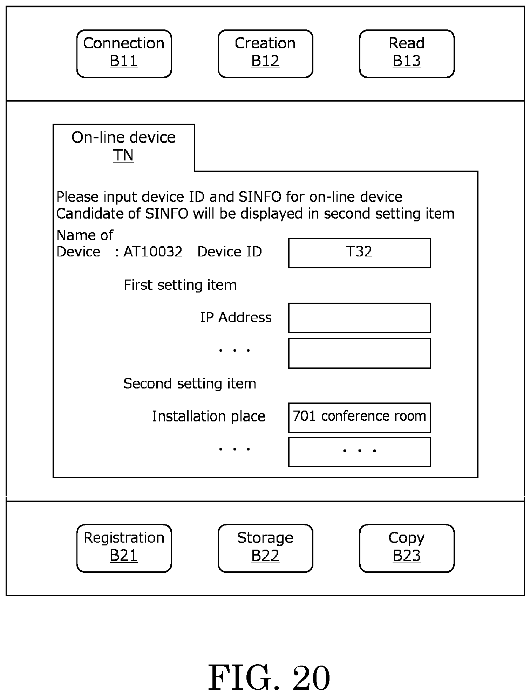

FIG. 20 is a schematic diagram of the second setting screen. In the second setting screen, setting information for each of the setting items relating to the device 32 and stored in the storage 11 is displayed as the candidate for the setting information for each of the setting items relating to the on-line device that is a new target for generation of setting information.

FIG. 20 illustrates that the device ID "T32" that is the target for generation of setting information and the second setting item, such as the installation place "No. 701 conference room", are displayed on the second setting screen. Specifically, FIG. 20 illustrates that the present apparatus 10 displays the specific setting information on the display 20 using the display part 12, as the candidate for the setting information for the second setting item included in the first setting screen.

FIG. 20 also illustrates that a message for the user is displayed on the second setting screen. The message displayed on the second setting screen indicates that input of the setting information of the on-line device is required, and indicates the candidate for the device ID and the candidate for the setting information for the second setting item.

The user then inputs the first setting item to the first setting screen using the input device of the present apparatus 10.

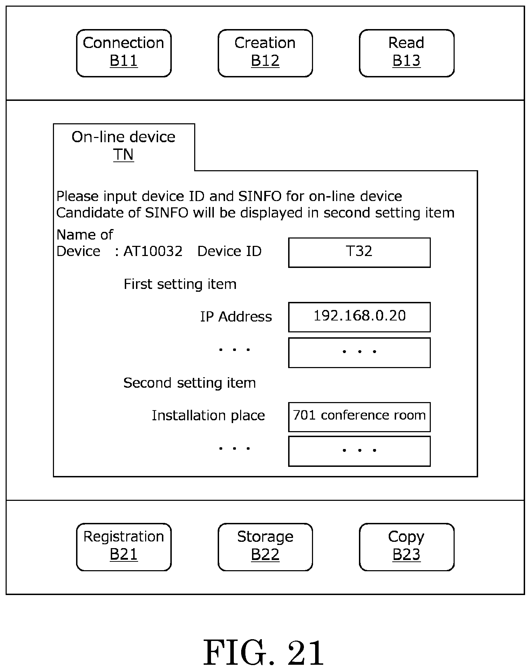

FIG. 21 is a schematic diagram of the first setting screen to which the setting information for the first setting item has been input.

FIG. 21 illustrates that the IP address "192.168.0.20" or the like that is the first setting item has been input to the first setting screen by the user.

Referring back to FIG. 17, the present apparatus 10 then transmits the setting information input to the first setting screen to the device 32 using the controller 13, and registers the setting information (S24). The present apparatus 10 also stores the setting information input to the first setting screen in the storage 11 using the controller 13. When the device 32 receives the setting information from the controller 13 of the present apparatus 10, the device 32 stores the received setting information in the storage member of the device 32.

Registration in the device 32 is executed by the user by selecting the registration button B21 using the input device of the present apparatus 10.

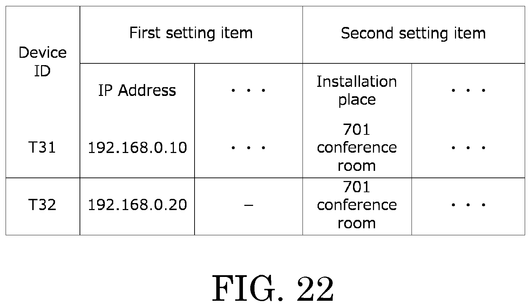

FIG. 22 is a schematic diagram of the setting information stored in the storage 11.

When the user selects the registration button B21 using the input device of the present apparatus 10, the present apparatus 10 transmits the setting information input to the first setting screen to the device 32 using the controller 13 and the selection part 14, and stores the setting information in the storage 11 as the setting information for each of the setting items relating to the device 32.

FIG. 22 illustrates that the device ID and the setting information input to the first setting screen are stored in association with each other in the storage 11.

In addition, for example, the present apparatus 10 stores the setting information input to the second setting item, out of the setting information included in the first setting screen, in the storage 11 as the specific setting information, using the controller 13. Specifically, the controller 13 stores the second setting item in the storage 11 as the specific setting information, out of the first setting item of the setting information included in the first setting screen, such as the IP address "192.168.0.20", and the second setting item, such as the installation place "No. 701 conference room".

### Conclusion

In the present apparatus 10 according to the embodiment described above, the present apparatus 10 can display the second setting screen to which setting information of the setting item relating to the off-line device is input on the display 20, after generating the setting information for each of the setting items relating to the on-line device. Therefore, the user of the present apparatus 10 can input setting information of the setting item displayed on the second setting screen to the second setting screen using the input device of the present apparatus 10.

In addition, after generating the setting information of the setting item relating to the off-line device, the present apparatus 10 can read the setting information of the setting item generated in the device in the off-line state, when the off-line device is connected to the communication network N and becomes the on-line device.

Specifically, the present apparatus 10 can generate setting information to be set for the device even when the device is in the off-line state.

It should be noted that the embodiment described above illustrates the case where the user inputs setting information relating to the off-line device (device 32) to the present apparatus 10, with reference to the setting information relating to the on-line device (device 31) and input earlier by the user, as an example. However, the present invention is not limited thereto. The user can input setting information relating to the on-line device (for example, the device 31) to the present apparatus, with reference to the setting information relating to the off-line device (for example, the device 32) and input earlier by the user. Specifically, the present apparatus can store, using the controller, the setting information input as the setting information for the second setting item included in the second setting screen, in the storage as the specific setting information, and store the specific setting information in the storage as the setting information for the second setting item included in the first setting screen. Further, as another example, the present apparatus can display the specific setting information on the display using the display part, as the candidate for the setting information for the second setting item included in the first setting screen. In addition, based on whether the storage button has been selected, the selection part selects whether to store the setting information (that is, the candidate for the setting information for the second setting item) for the second setting item of the second setting screen relating to the off-line device (for example, the device 32), in the storage as the setting information for the second setting item included in the first setting screen relating to the on-line device (for example, the device 31). Further, the controller stores the candidate for the setting information for the second setting item in the storage as the setting information for the second setting item included in the first setting screen relating to the on-line device (for example, the device 31), based on a result of selection with the selection part, that is, specification of selection of the storage button with the selection part. The present apparatus with such a configuration can generate setting information to be set for the device even for the device in the off-line state.

### Conclusion of Present Apparatus and Present Program

Configurational features of the present apparatus and the present program as described above will now be summarized below.

### (Feature 1)

An information processing apparatus comprising:
a storage (for example, storage 11) that stores setting information for each of setting items relating to a device (for example, device 31 and a device 32) connected to a communication network (for example, communication network N);
a display part (for example, display part 12) that displays a setting screen to which the setting information is input on a display (for example, display 20); and
a controller (for example, controller 13) that stores the setting information input to the setting screen in the storage, wherein
the setting screen includes:
   a first setting screen to which the setting information for each of the setting items relating to a first device (for example, device 31) in an on-line state of being connected to the communication network is input; and
   a second setting screen to which the setting information for each of the setting items relating to a second device (for example, device 32) in an off-line state of being not connected to the communication network is input, and
the display part simultaneously displays the first setting screen and the second setting screen on the display.

### (Feature 2)

The information processing apparatus according to feature 1, wherein the controller transmits the setting information input to the first setting screen to the first device, and stores the setting information input to the second setting screen in the storage.

### (Feature 3)

The information processing apparatus according to feature 2, wherein the controller stores the setting information input to the first setting screen in the storage.

### (Feature 4)

The information processing apparatus according to feature 1, wherein
the setting items include: a first setting item settable only when the device is in the on-line state; and a second setting item settable both when the device is in the on-line state and when the device is in the off-line state,
the setting items displayed on the first setting screen include the first setting item and the second setting item, and
the setting item displayed on the second setting screen is the second setting item.

### (Feature 5)

The information processing apparatus according to feature 4, wherein
the controller stores the setting information input to the second setting item included in the first setting screen in the storage as specific setting information, and
the specific setting information is stored in the storage as the setting information for the second setting item included in the second setting screen.

### (Feature 6)

The information processing apparatus according to feature 4, wherein
the controller stores the setting information input to the second setting item included in the first setting screen in the storage as specific setting information, and
the display part displays the specific setting information on the display, as a candidate for the setting information for the second setting item included in the second setting screen.

### (Feature 7)

The information processing apparatus according to feature 6, comprising:
a selection part (selection part 14, for example) that selects whether to store the candidate for the setting item in the storage as the setting information for the second setting item included in the second setting screen, wherein
the controller stores the candidate for the setting item in the storage as the setting information for the second setting item included in the second setting screen, based on a result of selection with the selection part.

### (Feature 8)

The information processing apparatus according to feature 4, wherein
the controller stores the setting information input to the second setting item included in the second setting screen in the storage as specific setting information, and
the specific setting information is stored in the storage as the setting information for the second setting item included in the first setting screen.

### (Feature 9)

The information processing apparatus according to feature 4, wherein
the controller stores the setting information input to the first setting item included in the second setting screen in the storage as specific setting information, and
the display part displays the specific setting information on the display, as a candidate for the setting information for the second setting item included in the first setting screen.

### (Feature 10)

The information processing apparatus according to feature 9, comprising:
a selection part (for example, selection part 14) that selects whether to store the candidate for the setting item in the storage as the setting information for the second setting item included in the first setting screen, wherein the controller stores the candidate for the setting item in the storage as the setting information for the second setting item included in the first setting screen, based on a result of selection with the selection part.

### (Feature 11)

The information processing apparatus according to feature 1, wherein the display part displays the first setting screen and the second setting screen in a tab (for example, tab TN, tab TF) form on the display.

### (Feature 12)

An information processing program causing a computer to function as the information processing apparatus according to any one of features 1 to 11.

## Claims

1. An information processing apparatus (10) comprising:
a storage (11) that stores setting information for each of one or more setting items relating to a device (31, 32) connected to a communication network (N);
a display part (12) that displays a setting screen to which the setting information is input on a display (20); and
a controller (13) that stores the setting information input to the setting screen in the storage (11), wherein
the setting screen includes:
a first setting screen to which the setting information for each of the setting items relating to a first device (31) in an on-line state of being connected to the communication network (N) is input; and
a second setting screen to which the setting information for each of the setting items relating to a second device (32) in an off-line state of being not connected to the communication network (N) is input, and
the display part (12) simultaneously displays the first setting screen and the second setting screen on the display (20).

2. The information processing apparatus (10) according to claim 1, wherein the controller (13) transmits the setting information input to the first setting screen to the first device (31), and stores the setting information input to the second setting screen in the storage (11).

3. The information processing apparatus (10) according to claim 2, wherein the controller (13) stores the setting information input to the first setting screen in the storage (11).

4. The information processing apparatus (10) according to claim 1, wherein
the setting items include: a first setting item settable only when the device (31, 32) is in the on-line state; and a second setting item settable both when the device (31, 32) is in the on-line state and when the device (31, 32) is in the off-line state,
the setting items displayed on the first setting screen include the first setting item and the second setting item, and
the setting item displayed on the second setting screen is the second setting item.

5. The information processing apparatus (10) according to claim 4, wherein
the controller (13) stores the setting information input to the second setting item included in the first setting screen in the storage (11) as specific setting information, and
the specific setting information is stored in the storage (11) as the setting information for the second setting item included in the second setting screen.

6. The information processing apparatus (10) according to claim 4, wherein
the controller (13) stores the setting information input to the second setting item included in the first setting screen in the storage (11) as specific setting information, and
the display part (12) displays the specific setting information on the display (20) as a candidate for the setting information for the second setting item included in the second setting screen.

7. The information processing apparatus (10) according to claim 6, comprising:
a selection part (14) that selects whether to store the candidate for the setting item in the storage (11) as the setting information for the second setting item included in the second setting screen, wherein
the controller (13) stores the candidate for the setting item in the storage (11) as the setting information for the second setting item included in the second setting screen, based on a result of selection with the selection part (14).

8. The information processing apparatus (10) according to claim 4, wherein
the controller (13) stores the setting information input to the second setting item included in the second setting screen in the storage (11) as specific setting information, and
the specific setting information is stored in the storage (11) as the setting information for the second setting item included in the first setting screen.

9. The information processing apparatus (10) according to claim 4, wherein
the controller (13) stores the setting information input to the first setting item included in the second setting screen in the storage (11) as specific setting information, and
the display part (12) displays the specific setting information on the display (20) as a candidate for the setting information for the second setting item included in the first setting screen.

10. The information processing apparatus (10) according to claim 9, comprising:
a selection part (14) that selects whether to store the candidate for the setting item in the storage (11) as the setting information for the second setting item included in the first setting screen, wherein
the controller (13) stores the candidate for the setting item in the storage (11) as the setting information for the second setting item included in the first setting screen, based on a result of selection with the selection part (14).

11. The information processing apparatus (10) according to claim 1, wherein the display part (12) displays the first setting screen and the second setting screen in a tab form on the display (20).

12. An information processing program causing a computer to function as the information processing apparatus (10) according to any one of claims 1 to 11.
